# EUROPÄISCHE PATENTSCHRIFT

(11) **EP 1 745 090 B1**
(45) Veröffentlichungstag und Bekanntmachung des Hinweises auf die Patenterteilung: **25.06.2014**
(21) Anmeldenummer: 05717111.8
(22) Anmeldetag: 21.03.2005
(51) Int. Cl.: C08J 3/14, C08L 77/02, B29C 67/00

(54) **POLYMERPULVER MIT POLYAMID, VERWENDUNG IN EINEM FORMGEBENDEN VERFAHREN UND FORMKÖRPER, HERGESTELLT AUS DIESEM POLYMERPULVER**
POLYMER POWDER CONTAINING POLYAMIDE, USE OF SAID POWDER IN A MOULDING METHOD AND MOULDED BODY PRODUCED FROM THE SAME
POUDRE POLYMERE CONTENANT DU POLYAMIDE, UTILISATION DE LADITE POUDRE DANS UN PROCEDE DE MOULAGE ET CORPS MOULES PRODUITS A PARTIR DE LADITE POUDRE POLYMERE

(30) Priorität: 14.05.2004 DE 102004024440
(43) Veröffentlichungstag der Anmeldung: 24.01.2007
(73) Patentinhaber: Evonik Degussa GmbH, 45128 Essen (DE)
(72) Erfinder: MONSHEIMER, Sylvia, 45721 Haltern am See (DE); BAUMANN, Franz-Erich, 48249 Dülmen (DE); GREBE, Maik, 44805 Bochum (DE)
(86) Internationale Anmeldenummer: PCT/EP2005/051289
(87) Internationale Veröffentlichungsnummer: WO 2005/111119

(56) Entgegenhaltungen:
- EP-A- 1 413 595
- WO-A-96/06881
- DE-A1- 10 122 492
- US-A- 5 733 497

## Beschreibung

Die zügige Bereitstellung von Prototypen ist eine in der jüngsten Zeit häufig gestellte Aufgabe. Besonders geeignet sind Verfahren, die auf der Basis von pulverförmigen Werkstoffen arbeiten, und bei denen schichtweise durch selektives Aufschmelzen und Verfestigen die gewünschten Strukturen hergestellt werden. Auf Stützkonstruktionen bei Überhängen und Hinterschnitten kann dabei verzichtet werden, da das die aufgeschmolzenen Bereiche umgebende Pulverbett ausreichende Stützwirkung bietet. Ebenso entfällt die Nacharbeit, Stützen zu entfernen. Die Verfahren sind auch für die Herstellung von Kleinserien geeignet.

Die Erfindung betrifft ein Polymerpulver auf Basis eines Polyamides 11, bevorzugt hergestellt durch Polykondensation von ω-Aminoundecansäure, die Verwendung dieses Pulvers in formgebenden Verfahren, sowie Formkörper, hergestellt durch ein schichtweise arbeitendes Verfahren, mit welchem selektiv Bereiche einer Pulverschicht aufgeschmolzen werden, unter Verwendung dieses Pulvers. Nach Abkühlen und Verfestigen der zuvor Schicht für Schicht aufgeschmolzenen Bereiche kann der Formkörper dem Pulverbett entnommen werden.

Die Selektivität der schichtweise arbeitenden Verfahren kann dabei beispielsweise über den Auftrag von Suszeptoren, Absorbern, Inhibitoren, oder durch Masken, oder über fokussierte Energieeinbringung, wie beispielsweise durch einen Laserstrahl oder über Glasfasern erfolgen. Der Energieeintrag wird über elektromagnetische Strahlung erreicht

Im Folgenden werden einige Verfahren beschrieben, mit denen aus dem erfindungsgemäßen Pulver erfindungsgemäße Formteile hergestellt werden können, ohne dass die Erfindung darauf beschränkt werden soll.

Ein Verfahren, welches besonders gut für den Zweck des Rapid Prototypings geeignet ist, ist das selektive Laser-Sintern. Bei diesem Verfahren werden Kunststoffpulver in einer Kammer selektiv kurz mit einem Laserstrahl belichtet, wodurch die Pulver-Partikel, die von dem Laserstrahl getroffen werden, schmelzen. Die geschmolzenen Partikel laufen ineinander und erstarren schnell wieder zu einer festen Masse. Durch wiederholtes Belichten von immer heu aufgebrachten Schichten können mit diesem Verfahren dreidimensionale Körper einfach und schnell hergestellt werden.

Das Verfahren des Laser-Sinterns (Rapid Prototyping) zur Darstellung von Formkörpern aus pulverförmigen Polymeren wird ausführlich in der Patentschriften US 6,136,948 und WO 96/06881 (beide DTM Corporation) beschrieben. Eine Vielzahl von Polymeren und Copolymeren wird für diese Anwendung beansprucht, wie z.B. Polyacetat, Polypropylen, Polyethylen, Ionomere und Polyamid.

Andere gut geeignete Verfahren sind das SN-Verfahren wie in WO 01/38061 beschrieben, oder ein Verfahren wie in EP 1015 214 beschrieben. Beide Verfahren arbeiten mit einer flächigen Infrarotheizung zum Aufschmelzen des Pulvers. Die Selektivität des Aufschmelzens wird bei ersterem durch die Auftragung eines Inhibitors, beim zweiten Verfahren durch eine Maske erreicht. Ein weiteres Verfahren ist in DE 103 11438 beschrieben. Bei diesem wird die zum Verschmelzen benötigte Energie durch einen Mikrowellengenerator eingebracht und die Selektivität wird durch Auftragen eines Suszeptors erreicht.

Für die genannten Rapid-Prototyping- bzw. Rapid-Manufacturing-Verfahren (RP- oder RM-Verfahren) können pulverförmige Substrate, insbesondere Polymere, vorzugsweise ausgewählt aus Polyester, Polyvinylchlorid, Polyacetal, Polypropylen, Polyethylen, Polystyrol, Polycarbonat, Poly-(N-methylmethacrylimide) (PMMI), Polymethylmethacrylat (PMMA), Ionomer, Polyamid, oder Gemische davon, eingesetzt werden.

In WO 96/06881 wird ein für das Lasersintern geeignetes Polymerpulver beschrieben, das bei der Bestimmung des Schmelzverhaltens durch Differential Scanning Calorimetry bei einer Scanning rate von 10-20 C/min keine Überlappung des Schmelze- und Rekristallisationspeaks zeigt, einen ebenfalls durch DSC bestimmten Kristallinitätsgrad von 10-90% aufweist, ein zahlenmäßiges Mittel des Molekulargewichtes Mn von 30.000 - 500.000 hat und dessen Quotient Mw/Mn im Bereich von 1 bis 5 liegt.

DE 197 47 309 beschreibt die Verwendung eines Polyamid 12-Pulvers mit erhöhter Schmelztemperatur und erhöhter Schmelzenthalpie, welches durch Umfällung eines zuvor durch Ringöffnung und anschließende Polykondensation von Laurinlactam hergestellten Polyamids erhalten wird. Es handelt sich dabei um ein Polyamid 12. Nachteilig bei diesem Pulver ist die relativ hohe BET-Oberfläche, meist oberhalb von 6 m²/g, die zum einen zu einem erhöhten Bedarf an Rieselhilfe führt, was wiederum das Verarbeitungsfenster verkleinert, das heißt die Temperaturdifferenz, an deren unterer Grenze soeben kein Curl mehr auftritt und an deren oberer Grenze soeben noch kein flächiges Aufschmelzen der Pulverschicht stattfindet. Zum anderen wird durch die hohe BET-Oberfläche die Wiederverwendbarkeit des im ersten Durchgang nichtaufgeschmolzenen Pulvers verschlechtert. Eine niedrigere BET-Oberfläche würde man erhalten, wenn man gröberes Korn herstellen würde, was aber der erreichbaren Bauteilauflösung der pulverbasierenden Verfahren widersprechen würde.

Nachteilig ist bei der Verarbeitung mittels einem der oben beschriebenen formgebenden Verfahren, dass zur Vermeidung des sogenannten Curls die Temperatur in dem Bauraum möglichst gleichmäßig auf einem Niveau knapp unterhalb des Schmelzpunktes des polymeren Werkstoffes gehalten werden muss. Mit Curl ist ein Verzug des bereits aufgeschmolzenen Bereiches gemeint, der ein zumindest teilweises Herausragen aus der Bauebene bewirkt. Es besteht damit die Gefahr, dass beim Legen der nächsten Pulverschicht die herausragenden Bereiche verschoben oder sogar ganz herausgerissen werden. Das hat für den Prozess zur Folge, dass die Bauraumtemperatur insgesamt auf einem relativ hohen Niveau gehalten werden muss. Damit eine scharfe Trennung der Bereiche, in die elektromagnetische Energie eingebracht wurde, zu denen, die nicht aufgeschmolzen werden sollen, gegeben ist, ist eine möglichst hohe Schmelzenthalpie wünschenswert, die als scharfer Peak im DSC (Differential Scanning Calorimetry nach DIN 53765) ausgebildet ist. Auch Wärmeleitung und Wärmestrahlung aus dem aufgeschmolzenen Bereich, die ja nicht verhindert werden kann, hat zur Folge, dass der Formkörper mehr oder weniger stark von der Sollkontur abweicht. Eine möglichst hohe Schmelzenthalpie des Pulvers verhindert das Ansintern des Pulverbettes an den aufgeschmolzenen Bereich.

EP-A-1 413 595 offenbart ein 11-Polyamidpulver mit einer Rekristallisationstemperatur zwischen 150 und 160 °C und einer Schmelzenthalpie von 100 bis 110 J/g.

Aufgabe der vorliegenden Erfindung war es deshalb, ein Polymerpulver bereitzustellen, welches die Erzeugung möglichst formtreuer Formkörper mit möglichst hoher Oberflächengüte ermöglicht. Dabei ist das Verarbeitungsfenster so groß, dass nicht an der oberen oder unteren Grenze gearbeitet werden muß, bei gleichzeitigem Beibehalt der Korngrößen der derzeit am Markt erhältlichen Standardpulver. Das Verarbeitungsverfahren ist dabei ein schichtweise arbeitendes Verfahren, bei dem selektiv Bereiche der jeweiligen Pulverschicht mittels elektromagnetischer Energie aufgeschmolzen werden und sich nach dem Abkühlen zu dem gewünschten Formkörper verbunden haben.

Überraschenderweise wurde nun gefunden, wie in den Ansprüchen beschrieben, dass sich durch die Verwendung von Polyamid 11 durch Fällungskrislallisation Polymerpulver herstellen lassen, aus denen sich Formkörper durch ein schichtweise arbeitendes Verfahren, bei welchem selektiv Bereiche der jeweiligen Pulverschicht aufgeschmolzen werden, produzieren lassen, die Vorteile bezüglich der Oberflächengüte und Formtreue aufweisen und dabei bessere Eigenschaften bezüglich Verarbeitung aufweisen wie aus einem Polymerpulver nach dem Stand der Technik, beispielsweise nach DE 197 47 309.

Gegenstand der vorliegenden Erfindung ist deshalb ein Polymerpulver zum Verarbeiten in einem schichtweise arbeitenden Verfahren, bei welchem selektiv Bereiche der jeweiligen Schicht aufgeschmolzen werden, welches dadurch gekennzeichnet ist, dass das Pulver zumindest ein Polyamid 11, bevorzugt ein Polyamid 11 hergestellt durch Polykondensation von ω-Aminoundecansäure, aufweist. Dabei weist das erfindungsgemäße Polymerpulver eine mittels DSC ermittelte Schmelzeenthalpie von mindestens 125 J/g auf sowie einen Rekristallisationspeak von mindestens 148 °C, bevorzugt eine Schmelzeenthalpie von mindestens 130 J/g auf sowie einen Rekristallisationspeak von mindestens 150 °C, und besonders bevorzugt eine Schmelzeenthalpie von mindestens 130 J/g auf sowie einen Rekristallisationspeak von mindestens 151 °C. Die BET-Oberfläche liegt bei dem erfindungsgemäßen Polyamid 11-Pulver kleiner als 6 m²/g, bevorzugt kleiner als 5 m²/g, und besonders bevorzugt kleiner als 4 m²/g, wobei der mittlere Korndurchmesser bevorzugt zwischen 40 und 120 µm liegt, und bevorzugt zwischen 45 und 100 µm, und besonders bevorzugt zwischen 50 und 70 µm.
Die BET-Oberfläche wird durch Gasadsorption nach dem Prinzip von Brunauer, Emmet und Teller ermittelt; die herangezogene Norm ist die DIN /ISO 927766333.

Außerdem sind Gegenstand vorliegenden Erfindung Formkörper, hergestellt durch ein schichtweise arbeitendes Verfahren, welches selektiv Bereiche der jeweiligen Schicht aufschmilzt, welche dadurch gekennzeichnet sind, dass sie zumindest Polyamid 11, bevorzugt ein Polyamid 11, hergestellt durch Polykondensation von ω-Aminoundecansäure, und ggf. weitere Zuschlagstoffe, wie z.B. Stabilisatoren, Füllstoffe, Pigmente, Verlaufsmittel und Rieselhilfen, aufweisen.

Das erfindungsgemäße Polymerpulver hat den Vorteil, dass aus ihm durch ein schichtweise arbeitendes Verfahren, bei dem selektiv Bereiche der jeweiligen Schicht aufgeschmolzen werden, hergestellte Formkörper eine bessere Formtreue und eine bessere Oberflächenqualität gegenüber Formkörpern aus herkömmlichen Polyamidpulvern haben. Dabei weist das erfindungsgemäße Pulver ein breiteres Verarbeitungsfenster und eine bessere Wiederverwendbarkeit auf als herkömmliche Polyamidpulver.

Die aus dem erfindungsgemäßen Pulver hergestellten Formkörper weisen dabei ähnlich gute mechanische Eigenschaften auf wie die aus herkömmlichen Pulver hergestellten Formkörper. Das erfindungsgemäße Polymerpulver wird nachfolgend beschrieben, ohne dass die Erfindung darauf beschränkt sein soll.

Das erfindungsgemäße Polymerpulver zum Verarbeiten in einem schichtweise arbeitenden Verfahren, bei welchem selektiv Bereiche der jeweiligen Schicht aufgeschmolzen werden, zeichnet sich dadurch aus, dass das Pulver zumindest Polyamid 11 aufweist.

Erfindungsgemäßes Pulver erhält man beispielsweise durch ein Verfahren nach DE 29 06 647 B1 oder durch DE 19708146, wobei aber ein Polyamid 11 - Granulat als Ausgangsmaterial verwendet wird. Das Polyamid wird in Ethanol gelöst und unter bestimmten Bedingungen auskristallisiert. Dabei erhält man im Gegensatz zu Mahlpulvern ein Pulver mit relativ runder Kornform. Gegebenenfalls wird eine Schutzsiebung und weitere Klassierung oder Kaltmahlung angeschlossen. Der Fachmann kann die Bedingungen leicht durch orientierende Vorversuche herausfinden.

Überraschenderweise wurde festgestellt, dass die in DE 197 47 309 beschriebenen vorteilhaften Eigenschaften des Polyamidpulvers, nämlich eine hohe Schmelzenthalpie, weitaus vorteilhafter eingestellt werden kann, wenn ein Polyamid 11 verwendet wird. Außerdem kann dann ebenso vorteilhaft eine niedrige BET-Oberfläche bei gleichzeitig geringem mittleren Korndurchmesser eingestellt werden.

Eine hohe Rekristallisationstemperatur ist, anders als in DE 197 47 309 A1 ebenfalls von Vorteil, da einerseits ein breites Verarbeitungsfenster wegen der erhöhten Schmelztemperatur des PA 11 - Fällpulvers erhalten bleibt, aber andererseits die Recyclingfähigkeit des Materials deutlich verbessert wird: Pulver, welches bei einem Bauprozess nicht aufgeschmolzen wurde, kann mit einer vorteilhafteren Auffrischrate wiederverwendet werden, ohne dass die Oberflächeneigenschaften darunter leiden, wenn die Rekristallisationstemperatur hoch ist.

Daher weist das erfindungsgemäße Polymerpulver eine mittels DSC ermittelte Schmelzenthalpie von mindestens 125 J/g und eine Rekristallisationstemperatur von mindestens 148 °C auf, bevorzugt eine Schmelzenthalpie von mindestens 130 J/g und eine Rekristallisationstemperatur von mindestens 150 °C, und besonders bevorzugt eine Schmelzenthalpie von mindestens 130 J/g und eine Rekristallisationstemperatur von mindestens 151 °C, auf. Die BET-Oberfläche liegt bei dem erfindungsgemäßen Polyamid 11-Pulver kleiner als 6 m²/g, bevorzugt kleiner als 5 m²/g, und besonders bevorzugt kleiner als 4 m²/g, wobei der mittlere Korndurchmesser bevorzugt zwischen 40 und 120 µm liegt, und bevorzugt zwischen 45 und 100 µm, und besonders bevorzugt zwischen 50 und 70 µm.

Die verschiedenen Parameter wurden mittels DSC (Differential Scanning Calorimetry) nach DIN 53765, bzw. nach AN-SAA 0663 bestimmt. Die Messsungen wurden mit einem Perkin Elmer DSC 7 mit Stickstoff als Spülgas und einer Aufheizrate sowie Abkühlrate von 20 K/min durchgeführt. Der Meßbereich betrug -90 bis +250 °C.

Die Lösungsviskosität in 0,5%iger m-Kresollösung nach DIN 53727 beträgt bei den erfindungsgemäßen Polyamidpulvern bevorzugt 1,4 bis 2,1, besonders bevorzugt 1,5 bis 1,9, und ganz besonders bevorzugt zwischen 1,6 und 1,7.

Das Polyamid kann ungeregelt, teilgeregelt, oder geregelt sein. Die Regelung kann entweder an der Aminoendgruppe, oder an der Säureendgruppe ansetzen und mono-, di-, oder mehrfunktional sein. Geeignete Regler sind beispielsweise Alkohole, Amine, Ester, oder Carbonsäuren. Als Regler werden Mono-, Di- oder Polyamine oder -carbonsäuren eingesetzt.

Bevorzugt wird ein ungeregeltes oder amingeregeltes Material verwendet, welches beim Bauprozeß einen guten Verlauf der aufgeschmolzenen Partikel sowie gute mechanische Eigenschaften im fertigen Bauteil bewirkt.

Die Ausgangsgranulate zur Verarbeitung zu erfindungsgemäßen Pulvern werden kommerziell beispielsweise von der Elf Atochem, Frankreich (Rilsan, Polyamid 11) vertrieben. Ein geeignetes Einsatzmaterial ist z.B. RILSAN BMNO TL mit einer rel. Lösungsviskosität von 1,61.

Erfindungsgemäßes Polymerpulver kann außerdem Hilfsstoffe und/oder Füllstoff und/oder weitere organische oder anorganische Pigmente aufweisen. Solche Hilfsstoffe können z.B. Rieselhilfsmittel, wie z.B. gefällte und / oder pyrogene Kieselsäuren sein. Gefällte Kieselsäuren werden zum Beispiel unter dem Produktnamen Aerosil, mit unterschiedlichen Spezifikationen, durch die Degussa AG angeboten. Vorzugsweise weist erfindungsgemäßes Polymerpulver weniger als 3 Gew.-%, vorzugsweise von 0,001 bis 2 Gew.-% und ganz besonders bevorzugt von 0,05 bis 1 Gew.-% solcher Hilfsstoffe bezogen auf die Summe der vorhandenen Polymere auf. Die Füllstoffe können z.B. Glas-, Metall- oder Keramikpartikel, wie z.B. Glaskugeln, Stahlkugeln oder Metallgrieß oder Fremdpigmente, wie z.B. Übergangsmetalloxide sein. Die Pigmente können beispielsweise Titandioxidpartikel basierend auf Rutil (bevorzugt) oder Anatas sein, oder Russpartikel.

Die Füllstoffpartikel weisen dabei vorzugsweise eine kleinere oder ungefähr gleich große mittlere Partikelgröße wie die Partikel der Polyamide auf. Vorzugsweise sollte die mittlere Partikelgröße d₅₀ der Füllstoffe die mittlere Partikelgröße d₅₀ der Polyamide um nicht mehr als 20 %, vorzugsweise um nicht mehr als 15 % und ganz besonders bevorzugt um nicht mehr als 5 % überschreiten. Die Partikelgröße ist insbesondere limitiert durch die zulässige Bauhöhe bzw. Schichtdicke in der Rapid-Prototyping/ Rapid Manufacturing-Anlage.

Vorzugsweise weist erfindungsgemäßes Polymerpulver weniger als 75 Gew.-%, bevorzugt von 0,001 bis 70 Gew.-%, besonders bevorzugt von 0,05 bis 50 Gew.-% und ganz besonders bevorzugt von 0,5 bis 25 Gew.-% solcher Füllstoffe bezogen auf die Summe der vorhandenen Polyamide auf.
Beim Überschreiten der angegebenen Höchstgrenzen für Hilfs- und/oder Füllstoffe kann es, je nach eingesetztem Füll- oder Hilfsstoff zu deutlichen Verschlechterungen der mechanischen Eigenschaften von Formkörpern kommen, die mittels solcher Polymerpulver hergestellt wurden. Es ist ebenso möglich, herkömmliche Polymerpulver mit erfindungsgemäßen Polymerpulvern zu mischen. Auf diese Weise lassen sich Polymerpulver mit einer weiteren Kombination von Oberflächeneigenschaften herstellen. Das Verfahren zur Herstellung solcher Mischungen kann z.B. DE 34 41 708 entnommen werden.

Zur Verbesserung des Schmelzeverlaufs bei der Herstellung der Formkörper kann ein Verlaufsmittel wie beispielsweise Metallseifen, bevorzugt Alkali- oder Erdalkalisalze der zugrunde liegenden Alkanmonocarbonsäuren oder Dimersäuren, dem gefällten Polyamidpulver zugesetzt werden. Die Metallseifenpartikel können in die Polymerpartikel eingearbeitet werden, es können aber auch Mischungen von feinteiligen Metallseifenpartikeln und Polymerpartikeln vorliegen.

Die Metallseifen werden in Mengen von 0,01 bis 30 Gew.-%, vorzugsweise 0,5 bis 15 Gew.-%, bezogen auf die Summe der im Pulver vorhandenen Polyamide eingesetzt Bevorzugt wurden als Metallseifen die Natrium- oder Calciumsalze der zugrundeliegenden Alkanmonocarbonsäuren oder Dimersäuren eingesetzt. Beispiele für kommerziell verfügbare Produkte sind Licomont NaV 101 oder Licomont CaV 102 der Firma Clariant.
Zur Verbesserung der Verarbeitungsfähigkeit oder zur weiteren Modifikation des Polymerpulvers können diesem anorganische Fremdpigmente, wie z.B. Übergangsmetalloxide, Stabilisatoren, wie z.B. Phenole, insbesondere sterisch gehinderte Phenole, Verlaufs- und Rieselhilfsmittel, wie z.B. pyrogene Kieselsäuren sowie Füllstoffpartikel zugegeben werden. Vorzugsweise wird, bezogen auf das Gesamtgewicht an Polymeren im Polymerpulver, soviel dieser Stoffe den Polymeren zugegeben, dass die für das erfindungsgemäße Polymerpulver angegeben Konzentrationen für Füll- und/oder Hilfsstoffe eingehalten werden.

Gegenstand der vorliegenden Erfindung sind auch Verfahren zur Herstellung von Formkörpern durch schichtweise arbeitende Verfahren, bei denen selektiv Bereiche der jeweiligen Schicht aufgeschmolzen werden, bei denen erfindungsgemäße Polymerpulver, welche dadurch gekennzeichnet sind, dass sie zumindest ein Polyamid 11, das eine Schmelzenthalpie von mindestens 125 J/g und eine Rekristallisationstemperatur von mindestens 148 °C aufweist, bevorzugt hergestellt durch Polykondensation von ω-Aminoundecansäure, aufweisen.

Die Energie wird durch elektromagnetische Strahlung eingebracht, und die Selektivität wird beispielsweise durch Masken, Auftragung von Inhibitoren, Absorbern, Suszeptoren, oder aber durch eine Fokussierung der Strahlung, beispielsweise durch Laser eingebracht. Die elektromagnetische Strahlung umfasst den Bereich von 100 nm bis 10 cm, bevorzugt zwischen 400 nm bis 10600 nm, oder zwischen 800 und 1060 nm. Die Quelle der Strahlung kann beispielsweise ein Mikrowellengenerator, ein geeigneter Laser, ein Heizstrahler oder eine Lampe sein, aber auch Kombinationen davon. Nach dem Abkühlen aller Schichten kann der erfindungsgemäße Formkörper entnommen werden.

Die nachfolgenden Beispiele für solche Verfahren dienen der Erläuterung, ohne die Erfindung darauf beschränken zu wollen.

Die Lasersinterverfahren sind hinlänglich bekannt und beruhen auf dem selektiven Sintern von Polymerpartikeln, wobei Schichten von Polymerpartikeln kurz einem Laserlicht ausgesetzt werden und so die Polymerpartikel, die dem Laserlicht ausgesetzt waren, miteinander verbunden werden. Durch die aufeinanderfolgende Versinterung von Schichten von Polymerpartikeln werden dreidimensionale Objekte hergestellt. Einzelheiten zum Verfahren des selektiven Laser-Sinterns sind z.B. den Schriften US 6,136,948 und WO 96/06881 zu entnehmen.

Andere gut geeignete Verfahren sind das SIV-Verfahren wie es in WO 01/38061 beschrieben, oder ein Verfahren wie in EP 1 015 214 beschrieben. Beide Verfahren arbeiten mit einer flächigen Infrarotheizung zum Aufschmelzen des Pulvers. Die Selektivität des Aufschmelzens wird bei ersterem durch die Auftragung eines Inhibitors, beim zweiten Verfahren durch eine Maske erreicht. Ein weiteres Verfahren ist in DE 103 11438 beschrieben. Bei diesem wird die zum Verschmelzen benötigte Energie durch einen Mikrowellengenerator eingebracht und die Selektivität wird durch Auftragen eines Suszeptors erreicht.
Die erfindungsgemäßen Formkörper, die durch ein schichtweise arbeitendes Verfahren, bei dem selektiv Bereiche aufgeschmolzen werden, hergestellt werden, zeichnen sich dadurch aus, dass sie zumindest ein Polyamid 11, das eine Schmelzenthalpie von mindestens 125 J/g und eine Rekristallisationstemperatur von mindestens 148 °C aufweist, bevorzugt hergestellt durch Polykondensation von ω-Aminoundecansäuren, aufweisen.

Die Formkörper können außerdem Füllstoffe und/oder Hilfsstoffe (hier gelten die Angaben wie für das Polymerpulver), wie z.B. thermische Stabilisatoren wie z.B. sterisch gehinderte Phenolderivate aufweisen. Füllstoffe können z.B. Glas-, Keramikpartikel und auch Metallpartikel wie zum Beispiel Eisenkugeln, bzw. entsprechende Hohlkugeln sein. Bevorzugt weisen die erfindungsgemäßen Formkörper Glaspartikel, ganz besonders bevorzugt Glaskugeln auf. Vorzugsweise weisen erfindungsgemäße Formkörper weniger als 3 Gew.-%, vorzugsweise von 0,001 bis 2 Gew.-% und ganz besonders bevorzugt von 0,05 bis 1 Gew.-% solcher Hilfsstoffe bezogen auf die Summe der vorhandenen Polymere auf. Ebenso bevorzugt weisen erfindungsgemäße Formkörper weniger als 75 Gew.-%, bevorzugt von 0,001 bis 70 Gew.-%, besonders bevorzugt von 0,05 bis 50 Gew.-% und ganz besonders bevorzugt von 0,5 bis 25 Gew.-% solcher Füllstoffe bezogen auf die Summe der vorhandenen Polymere auf.

Die folgenden Beispiele sollen das erfindungsgemäße Polymerpulver sowie dessen Verwendung beschreiben, ohne die Erfindung auf die Beispiele einzuschränken.

Die Messwerte der Laserbeugung wurden mit dem Malvern Mastersizer S, Ver. 2.18, erhalten.

### Vergleichsbeispiel 1: Umfällung von Polyamid 12 (PA 12) (nicht erfindungsgemäß)

400 kg ungeregeltes, durch hydrolytische Polymerisation hergestelltes PA 12 mit einer relativen Lösungsviskosität von 1.62 und einem Endgruppengehalt von 75 mmol/kg COOH bzw. 69 mmol/kg NH₂ werden mit 2500 1 Ethanol, vergällt mit 2-Butanon und 1 % Wassergehalt, innerhalb von 5 Stunden in einem 3 m³-Rührkessel (a = 160 cm) auf 145 °C gebracht und unter Rühren (Blattrührer, x = 80 cm, Drehzahl = 49 Upm) 1 Stunde bei dieser Temperatur belassen Anschließend wird die Manteltemperatur auf 124 °C reduziert und unter kontinuierlichem Abdestillieren des Ethanols mit einer Kühlrate von 25 K/h bei der derselben Rührerdrehzahl die Innentemperatur auf 125 °C gebraucht. Von jetzt an wird bei gleicher Kühlrate die Manteltemperatur 2K - 3 K unter der Innentemperatur gehalten. Die Innentemperatur wird mit gleicher Kühlrate auf 117 °C gebracht und dann 60 Minuten konstant gehalten. Danach wird weiter bei einer Kühlrate von 40 K/h abdestilliert und so die Innentemperatur auf 111 °C gebracht. Bei dieser Temperatur setzt die Fällung, erkennbar an der Wärmeentwicklung, ein. Die Destillationsgeschwindigkeit wird soweit erhöht, daß die Innentemperatur nicht über 111.3 °C ansteigt. Nach 25 Minuten fällt die Innentemperatur ab, was das Ende der Fällung anzeigt Durch weiteres Abdestillieren und Kühlung über den Mantel wird die Temperatur der Suspension auf 45 °C gebracht und die Suspension danach in einen Schaufeltrockner überführt. Das Ethanol wird bei 70 °C/ 400 mbar abdestilliert bis die Innentemperatur sich der Manteltemperatur annähert und der Rückstand anschließend bei 20 mbar/86 °C 3 Stunden nachgetrocknet

Man erhält ein gefälltes PA 12 mit einem mittleren Korndurchmesser von 55 µm. Die Schüttdichte betrug 435g/l.
Analog dem in Beispiel 1 gezeigten Vorgehen oder nach DE 19708146 wird Pulver aus PA 11 hergestellt.

### Vergleichsbeispiel 2: Kaltmahlpulver auf Basis von PA 11 (nicht erfindungsgemäß)

PA 11 - Granulat siehe Beispiel 1 mit einer rel. Lösungsviskosität von 1,61 und einem Endgruppengehalt von 125 mmol/kg COOH bzw. 9 mmol/kg NH₂ wird in einer Stiflmühle bei - 35°C zu einem Pulver mit folgenden Kennwerten vermahlen:
D(10%) = 34µm D(50%)= 88µm D(90%) = 136µm BET = 0,34m²/g Schüttdichte 476g/l

### Beispiel 3: Umfällung_von carboxylterminiertem Polyamid 11 (PA 11) (erfindungsgemäß)

4,0 kg carboxylterminiertes, durch Polykondensation von 50 kg w-Aminoundecansäure in Gegenwart von 450 g Dodecandisäure hergestelltes PA 11 mit einer relativen Lösungsviskosität von 1.61 und einem Endgruppengehalt von 125 mmol/kg COOH bzw. 9 mmol/kg NH₂ werden mit 20 1 Ethanol, vergällt mit 2-Butanon und 1 % Wassergehalt, innerhalb von 5 Stunden in einem 40 1- Rührkessel (D = 40 cm) auf 152 °C gebracht und unter Rühren (Blattrührer, d = 30 cm, Drehzahl = 89 Upm) 1 Stunde bei dieser Temperatur belassen. Anschließend wird die Manteltemperatur auf 120 °C reduziert und mit einer Kühlrate von 25 K/h bei der derselben Rührerdrehzahl die Innentemperatur auf 125 °C gebracht. Von jetzt an wird bei gleicher Kühlrate die Manteltemperatur 2 K - 3 K unter der Innentemperatur gehalten. Die Innentemperatur wird mit gleicher Kühlrate auf 112 °C gebracht und dann 60 Minuten konstant gehalten. Bei dieser Temperatur setzt die Fällung, erkennbar an der Wärmeentwicklung, ein. Nach 25 Minuten fällt die Innentemperatur ab, was das Ende der Fällung anzeigt. Man rührt noch 35 min bei dieser Temperatur, kühlt anschließend auf 75 °C ab und überführt die Suspension danach in einen Schaufeltrockner. Das Ethanol wird bei 70 °C/ 400 mbar abdestilliert bis die Innentemperatur sich der Manteltemperatur annähert und der Rückstand anschließend bei 20 mbar/86 °C 3 Stunden nachgetrocknet
Schüttdichte 481g/l. BET: 1,63 m²/g D(10%)=75µm D(50%)= 127µm D(90%)=200µm

### Beispiel 4: Umfällung von aminterminiertem Polyamid 11 (PA 11) (erfindungsgemäß)

4,0 kg diaminterminiertes, durch Polymerisation von 50 kg w-Aminoundecansäure in Gegenwart von 250 g 4,4'-Diaminocyclohexylmethan (PACM, Isomerengemisch) hergestelltes PA 11 mit einer relativen Lösungsviskosität von 1.82 und einem Endgruppengehalt von 15 mmol/kg COOH bzw. 87 mmol/kg NH₂ werden mit 20 1 Ethanol, vergällt mit 2-Butanon und 1 % Wassergehalt, innerhalb von 5 Stunden in einem 401- Rührkessel (D = 40 cm) auf 152 °C gebracht und unter Rühren (Blattrührer, d = 30 cm, Drehzahl = 89 Upm) 1 Stunde bei dieser Temperatur belassen. Anschließend wird die Manteltemperatur auf 120 °C reduziert und mit einer Kühlrate von 25 K/h bei der derselben Rührerdrehzahl die Innentemperatur auf 125 °C gebracht. Von jetzt an wird bei gleicher Kühlrate die Manteltemperatur 2K - 3 K unter der Innentemperatur gehalten und die Innentemperatur mit gleicher Kühlrate auf 112 °C gebracht. Diese Innentemperatur wird dann 60 Minuten auf ± 0,5°C konstant gehalten. Bei dieser Temperatur setzt die Fällung, erkennbar an der Wärmeentwicklung, ein. Nach 30 Minuten fällt die Innentemperatur ab, was das Ende der Fällung anzeigt. Man rührt noch 30 min bei dieser Temperatur, kühlt anschließend auf 75°C ab und überführt die Suspension danach in einen Schaufeltrockner. Das Ethanol wird bei 70 °C/ 400 mbar abdestilliert und der Rückstand anschließend bei 20 mbar/84 °C 3 Stunden nachgetrocknet.
Schüttdichte 486g/l. BET: 0,31 m²/g D(10%)=66µm D(50%)=110µm D(90%) = 162µm

### Beispiele 5 und 6: Umfällung von aminterminiertem Polyamid 11 (PA 11) (erfindungsgemäß)

Man wiederholt Beispiel 3 mit einer Rührerdrehzahl von 120 Upm (Beispiel 5) bzw. 150 Upm (Beispiel 6) und erhält folgende Fällpulver:

### Beispiele 5:

Schüttdichte 391g/l. BET: 4,80 m²/g D(10%)=44µm D(50%) = 59µm D(90%) = 84µm

### Beispiel 6:

Schüttdichte 366g/l. BET: 4,70 m²/g D(10%) = 28µm D(50%)=37µm D(90%) =51µm

### Beispiele 7: Zweistufige Umfällung von aminterminiertem Polyamid 11 (erfindungsgemäß)

4,0 kg diaminterminiertes PA 11 aus Beispiel 3 werden mit 201 Ethanol, vergällt mit 2-Butanon und 1 % Wassergehalt, innerhalb von 5 Stunden in einem 40 1- Rührkessel (D = 40 cm) auf 152 °C gebracht und unter Rühren (Blattrührer, d = 30 cm, Drehzahl = 120 Upm) 1 Stunde bei dieser Temperatur belassen. Anschließend wird die Manteltemperatur auf 120 °C reduziert und mit einer Kühlrate von 25 K/h bei der derselben Rührerdrehzahl die Innentemperatur auf 125 °C gebracht. Die Innentemperatur wird jetzt 30 Minuten konstant gehalten. Die Innentemperatur wird anschließend mit gleicher Kühlrate auf 112 °C gebracht und dann 60 Minuten konstant gehalten. Bei dieser Temperatur setzt die Fällung, erkennbar an der Wärmeentwicklung, ein. Nach 35 Minuten fällt die Innentemperatur ab, was das Ende der Fällung anzeigt. Man rührt noch 25 min bei dieser Temperatur, kühlt anschließend auf 75 °C ab und überführt die Suspension danach in einen Schaufeltrockner. Das Ethanol wird bei 70 °C/ 400 mbar abdestilliert und der Rückstand anschließend bei 20 mbar/85 °C 3 Stunden nachgetrocknet.
Schüttdichte: 483g/l. BET: 0,28 m²/g D(10%) = 42µm D(50%) = 82µm D(90%) = 127µm

### Beispiel 8: Umfällung von ungeregeltern Polyamid 11 (PA 11) (erfindunesgemäß)

4,0 kg ungeregeltes, durch Polykondensation von 50 kg w-Aminoundecansäure in Abwesenheit eines Endgruppenreglers hergestelltes PA 11 mit einer relativen Lösungsviskosität von 1.59 und einem Endgruppengehalt von 69 mmol/kg COOH bzw. 66 mmol/kg NH₂ werden mit 20 1 Ethanol, vergällt mit 2-Butanon und 1 % Wassergehalt, unter den Bedingungen von Beispiel 2 bei 152°C gelöst und bei 112,5°C ausgefällt Das Ethanol wird bei 70 °C/ 400 mbar abdestilliert und der Rückstand anschließend bei 20 mbar/85 °C in beschriebener Weise 3 Stunden nachgetrocknet.
Schüttdichte 487g/l. BET: 1,51 m²/g D(10%)=71µm D(50%)= 122µm D(90%)=191µm

| | **BET-Oberfläche [m²/g]** | **Mittlerer Korndurchmesser [µm]** | **Schmelz-temperatur °C** | **Schmelzenthalpie [J/g]** | **Rekristallisationspeak [°C]** |
|---|---|---|---|---|---|
| **Vergleichsbeispiel 1 Nicht erfindungsgemäß** | 6,3 | 55 | 186 | 112 | 141 |
| | | | | | |
| **Vergleichsbeispiel 2 Nicht erfindungsgemäß** | 0,34 | 88 | 191 | 87 | 157 |
| | | | | | |
| **Beispiel 3** | 1,63 | 127 | 191 | 132 | 150 |
| **Beispeil 4** | 0,31 | 110 | 191 | 139 | 154 |
| **Beispiel 5** | 4,8 | 59 | 193 | 129 | 151 |
| **Beispiel 6** | 4,7 | 37 | 192 | 126 | 151 |
| **Beispiel 7** | 0,28 | 82 | 192 | 133 | 152 |
| **Beispiel 8** | 1,51 | 122 | 191 | 136 | 152 |

Anhand der Beispiele kann sehr gut erkannt werden, dass die erfindungsgemäßen Polyamidpulver eine deutlich erhöhte Schmelzenthalpie und auch eine höhere , Rekristallisationstemperatur aufweisen als herkömmliche Polymerpulver. Dementsprechend lassen sich Bauteile mit höherer Oberflächenqualität herstellen, da weniger Pulver an den aufgeschmolzenen Bereichen anhaftet. Ferner ist die BET-Oberfläche niedriger bei gleichzeitig feinem mittleren Korndurchmesser. Die Recyclingfähigkeit des erfindungsgemäßen Pulvers ist damit ebenfalls verbessert gegenüber herkömmlichen Polyamidpulvem.

## Patentansprüche

1. Polymerpulver zur Verwendung in einem schichtweise arbeitenden Verfahren, bei dem selektiv Bereiche der jeweiligen Pulverschicht durch den Eintrag elektromagnetischer Energie aufgeschmolzen werden,
**dadurch gekennzeichnet,**
**dass** das Pulver zumindest ein Polyamid 11 mit einer Schmelzenthalpie von mindestens 125 J/g und einer Rekristallisationstemperatur von mindestens 148 °C, gemessen mittels Differential Scanning Calorimetry nach DIN 53765, aufweist.

2. Polymerpulver nach Anspruch 1,
**dadurch gekennzeichnet,**
**dass** das Pulver zumindest ein Polyamid 11 mit einer Schmelzenthalpie von mindestens 130 J/g und einer Rekristallisationstemperatur von mindestens 150 °C aufweist.

3. Polymerpulver nach einem der vorhergehenden Ansprüche,
**dadurch gekennzeichnet,**
**dass** das Pulver zumindest ein Polyamid 11 mit einer Schmelzenthalpie von mindestens 125 J/g und einer Rekristallisationstemperatur von mindestens 148 °C aufweist sowie eine BET-Oberfläche kleiner als 6 m²/g, gemessen nach DIN/ISO 927766333, und einen mittleren Komdurchmesser zwischen 40 und 120 µm, ermittelt durch Laserbeugung mit dem Malvern Mastersizer S, aufweist.

4. Polymerpulver nach einem der vorhergehenden Ansprüche,
**dadurch gekennzeichnet,**
**dass** das Pulver zumindest ein Polyamid 11 mit einer Schmelzenthalpie von mindestens 125 J/g und einer Rekristallisationstemperatur von mindestens 148 °C aufweist sowie eine BET-Oberfläche kleiner als 5m²/g und einen mittleren Komdurchmesser zwischen 45 und 100 µm aufweist.

5. Polymerpulver nach einem der vorhergehenden Ansprüche ,
**dadurch gekennzeichnet,**
**dass** das Pulver zumindest ein Polyamid 11 mit einer Schmelzenthalpie von mindestens 125 J/g und einer Rekristallisationstemperatur von mindestens 148 °C aufweist sowie eine BET-Oberfläche kleiner als 5m²/g und einen mittleren Korndurchmesser zwischen 50 und 70 µm aufweist.

6. Polymerpulver nach einem der Ansprüche 1 bis 5,
**dadurch gekennzeichnet,**
**dass** das Pulver zumindest ein Polyamid 11 aufweist und die Selektivität durch die Auftragung von Suszeptoren, Inhibitoren, Absorbern oder durch Masken erzielt wird

7. Polymerpulver nach einem der Ansprüche 1 bis 5,
**dadurch gekennzeichnet,**
**dass** das Pulver zumindest Polyamid 11 aufweist und die Selektivität durch die Fokussierung eines Laserstrahls erzielt wird

8. Polymerpulver nach zumindest einem der Ansprüche 1 bis 7,
**dadurch gekennzeichnet,**
**dass** das Pulver zumindest Polyamid 11, hergestellt durch Polykondensation von ω-Aminoundecansäure, aufweist.

9. Polymerpulver nach mindestens einem der Ansprüche 1 bis 8,
**dadurch gekennzeichnet,**
**dass** das Polyamidpulver durch Fällungskristallisation erhalten wurde.

10. Polymerpulver nach mindestens einem der Ansprüche 1 bis 9,
**dadurch gekennzeichnet,**
**dass** es ungeregeltes Polyamid 11 aufweist.

11. Polymerpulver nach mindestens einem der Ansprüche 1 bis 9,
**dadurch gekennzeichnet,**
**dass** es geregeltes Polyamid 11 aufweist.

12. Polymerpulver nach mindestens einem der Ansprüche 1 bis 9,
**dadurch gekennzeichnet,**
**dass** es teilgeregeltes Polyamid 11 aufweist.

13. Polymerpulver nach mindestens einem der Ansprüche 1 bis 12,
**dadurch gekennzeichnet,**
**dass** als Regler ein Mono-, Di-, oder Polyamin verwendet wird..

14. Polymerpulver nach mindestens einem der Ansprüche 1 bis 12,
**dadurch gekennzeichnet,**
**dass** als Regler eine Mono-, Di-, oder Polycarbonsäure verwendet wird.

15. Polymerpulver nach mindestens einem der Ansprüche 1 bis 11,
**dadurch gekennzeichnet,**
**dass** das Polyamidpulver eine Lösungsviskosität zwischen 1,4 bis 2,1, gemessen in 0,5%iger m-Kresollösung nach DIN 53727, aufweist.

16. Polymerpulver nach mindestens einem der Ansprüche 1 bis 11,
**dadurch gekennzeichnet,**
**dass** das Polyamidpulver eine Lösungsviskosität zwischen 1,5 bis 1,9 aufweist.

17. Polymerpulver nach mindestens einem der Ansprüche 1 bis 11,
**dadurch gekennzeichnet,**
**dass** das Polyamidpulver eine Lösungsviskosität zwischen 1,6 bis 1,7 aufweist.

18. Polymerpulver nach zumindest einem der Ansprüche 1 bis 17,
**dadurch gekennzeichnet,**
**dass** es Hilfsstoffe und/oder Füllstoff aufweist.

19. Polymerpulver nach Anspruch 18,
**dadurch gekennzeichnet,**
**dass** es als Hilfsstoff Rieselhilfsmittel aufweist.

20. Polymerpulver nach Anspruch 18,
**dadurch gekennzeichnet,**
**dass** es als Füllstoff Glaspartikel aufweist.

21. Polymerpulver nach Anspruch 18,
**dadurch gekennzeichnet,**
**dass** es als Hilfsstoff Metallseifen aufweist.

22. Polymerpulver nach zumindest einem der Ansprüche 1 bis 21,
**dadurch gekennzeichnet,**
**dass** es organische und/oder anorganische Pigmente aufweist.

23. Polymerpulver nach Anspruch 22,
**dadurch gekennzeichnet,**
**dass** es Ruß aufweist.

24. Polymerpulver nach Anspruch 22,
**dadurch gekennzeichnet,**
**dass** es Titandioxid aufweist.

25. Verfahren zur Herstellung von Formkörpern mit einem Polymerpulver nach zumindest einem der vorhergehenden Ansprüche, durch ein schichtweise arbeitendes Verfahren, bei dem selektiv Bereiche der jeweiligen Pulverschicht durch den Eintrag elektromagnetischer Energie aufgeschmolzen werden,
**dadurch gekennzeichnet,**
**dass** das Pulver zumindest ein Polyamid 11, das eine Schmelzenthalpie von mindestens 125 J/g und eine Rekristallisationstemperatur von mindestens 148 °C aufweist, enthält und die Selektivität durch die Auftragung von Suszeptoren, Inhibitoren, Absorbern oder durch Masken erzielt wird.

26. Verfahren zur Herstellung von Fonnkörpern mit einem Polymerpulver nach zumindest einem der vorhergehenden Ansprüche, durch ein schichtweise arbeitendes Verfahren, bei dem selektiv Bereiche der jeweiligen Pulverschicht durch den Eintrag elektromagnetischer Energie aufgeschmolzen werden,
**dadurch gekennzeichnet,**
**dass** das Pulver zumindest ein Polyamid 11 , das eine Schmelzenthalpie von mindestens 125 J/g und eine Rekristallisationstemperatur von mindestens 148 °C aufweist, enthält und die Selektivität durch die Fokussierung eines Laserstrahls erzielt wird.

27. Verfahren zur Herstellung von Formkörpern durch selektives Lasersintern von Polymerpulver gemäß zumindest einem der Ansprüche 1 bis 24.

28. Formkörper, hergestellt durch eines der Verfahren aus den Ansprüchen 25 bis 27
**dadurch gekennzeichnet,**
**dass** er zumindest ein Polyamid 11, das eine Schmelzenthalpie von mindestens 125 J/g und eine Rekristallisationstemperatur von mindestens 148 °C aufweist, aufweist.

29. Formkörper nach Anspruch 28,
**dadurch gekennzeichnet,**
**dass** er zumindest Polyamid 11, hergestellt Polykondensation von ω-Aminoundecansäuren, aufweist.

30. Formkörper nach einem der Ansprüche 28 und 29,
**dadurch gekennzeichnet,**
**dass** er Polyamidpulver, welches durch Fällungskristallisation erhalten wurde, aufweist.

31. Formkörper nach einem der Ansprüche 28 bis 30,
**dadurch gekennzeichnet,**
**dass** er ein Polyamid 11 mit einer Lösungsviskosität zwischen 1,4 bis 2,1 aufweist.

32. Formkörper nach einem der Ansprüche 28 bis 31,
**dadurch gekennzeichnet,**
**dass** er ein Polyamid 11 mit einer Lösungsviskosität zwischen 1,5 bis 1,9 aufweist.

33. Formkörper nach einem der Ansprüche 28 bis 32,
**dadurch gekennzeichnet,**
**dass** er ein Polyamid 11 mit einer Lösungsviskosität zwischen 1,6 bis 1,7 aufweist.

34. Formkörper nach einem der Ansprüche 28 bis 33,
**dadurch gekennzeichnet,**
**dass** er Hilfsstoffe und/oder Füllstoffe aufweist.

35. Formkörper nach einem der Ansprüche 28 bis 34,
**dadurch gekennzeichnet,**
**dass** er als Hilfsstoff Rieselhilfsmittel aufweist.

36. Formkörper nach einem der Ansprüche 28 bis 35,
**dadurch gekennzeichnet,**
**dass** er als Füllstoff Glaspartikel aufweist.

37. Formkörper nach einem der Ansprüche 28 bis 36,
**dadurch gekennzeichnet,**
**dass** er als Hilfsstoff Metallseifen aufweist.

38. Formkörper nach einem der Ansprüche 28 bis 37,
**dadurch gekennzeichnet,**
**dass** er organische und/oder anorganische Pigmente aufweist.

39. Formkörper nach einem der Ansprüche 28 bis 38,
**dadurch gekennzeichnet,**
**dass** er Ruß aufweist.

40. Formkörper nach einem der Ansprüche 28 bis 39,
**dadurch gekennzeichnet,**
**dass** er Titandioxid aufweist.

## Claims

1. Polymer powder for use in a layer-by-layer process in which regions of the respective pulverulent layer are selectively melted through introduction of electromagnetic energy,
**characterized in that**
the powder comprises at least one nylon-11 with an enthalpy of fusion of at least 125 J/g and with a recrystallization temperature of at least 148°C measured by means of differential scanning calorimetry to DIN 53765.

2. Polymer powder according to Claim 1,
**characterized in that**
the powder comprises at least one nylon-11 with an enthalpy of fusion of at least 130 J/g and with a recrystallization temperature of at least 150°C.

3. Polymer powder according to either of the preceding claims,
**characterized in that**
the powder comprises at least one nylon-11 with an enthalpy of fusion of at least 125 J/g and with a recrystallization temperature of at least 148°C, and also has a BET surface area smaller than 6 m²/g measured to DIN/ISO 9277 66333, and a median grain diameter of from 40 to 120 µm determined by laser scattering using a Malvern Mastersizer S.

4. Polymer powder according to any of the preceding claims,
**characterized in that**
the powder comprises at least one nylon-11 with an enthalpy of fusion of at least 125 J/g and with a recrystallization temperature of at least 148°C, and also has a BET surface area smaller than 5 m²/g and a median grain diameter of from 45 to 100 µm.

5. Polymer powder according to any of the preceding claims,
**characterized in that**
the powder comprises at least one nylon-11 with an enthalpy of fusion of at least 125 J/g and with a recrystallization temperature of at least 148°C, and also has a BET surface area smaller than 5 m²/g and a median grain diameter of from 50 to 70 µm.

6. Polymer powder according to any of Claims 1 to 5,
**characterized in that**
the powder comprises at least one nylon-11 and the selectivity is achieved through the application of susceptors, of inhibitors, or of absorbers, or through masks.

7. Polymer powder according to any of Claims 1 to 5,
**characterized in that**
the powder comprises at least nylon-11 and the selectivity is achieved through the focusing of a laser beam.

8. Polymer powder according to at least one of Claims 1 to 7,
**characterized in that**
the powder comprises at least nylon-11, prepared by polycondensation of ω-aminoundecanoic acid.

9. Polymer powder according to at least one of Claims 1 to 8,
**characterized in that**
the polyamide powder has been obtained by precipitative crystallization.

10. Polymer powder according to at least one of Claims 1 to 9,
**characterized in that**
it comprises unregulated nylon-11.

11. Polymer powder according to at least one of Claims 1 to 9,
**characterized in that**
it comprises regulated nylon-11.

12. Polymer powder according to at least one of Claims 1 to 9,
**characterized in that**
it comprises partially regulated nylon-11.

13. Polymer powder according to at least one of Claims 1 to 12,
**characterized in that**
the regulator used comprises a mono-, di-, or polyamine.

14. Polymer powder according to at least one of Claims 1 to 12,
**characterized in that**
the regulator used comprises a mono-, di-, or polycarboxylic acid.

15. Polymer powder according to at least one of Claims 1 to 11,
**characterized in that**
the polyamide powder has a solution viscosity of from 1.4 to 2.1 measured in 0.5% strength m-cresol solution to DIN 53727.

16. Polymer powder according to at least one of Claims 1 to 11,
**characterized in that**
the polyamide powder has a solution viscosity of from 1.5 to 1.9.

17. Polymer powder according to at least one of Claims 1 to 11,
**characterized in that**
the polyamide powder has a solution viscosity of from 1.6 to 1.7.

18. Polymer powder according to at least one of Claims 1 to 17,
**characterized in that**
it comprises auxiliaries and/or filler.

19. Polymer powder according to Claim 18,
**characterized in that**
it comprises powder-flow aids as auxiliary.

20. Polymer powder according to Claim 18,
**characterized in that**
it comprises glass particles as filler.

21. Polymer powder according to Claim 18, **characterized in that**
it comprises metal soaps as auxiliary.

22. Polymer powder according to at least one of Claims 1 to 21,
**characterized in that**
it comprises organic and/or inorganic pigments.

23. Polymer powder according to Claim 22,
**characterized in that**
it comprises carbon black.

24. Polymer powder according to Claim 22,
**characterized in that**
it comprises titanium dioxide.

25. Process for the production of moldings with a polymer powder according to at least one of the preceding claims, by a layer-by-layer process in which regions of the respective pulverulent layer are selectively melted through introduction of electromagnetic energy,
**characterized in that**
the powder comprises at least one nylon-11 whose enthalpy of fusion is at least 125 J/g and whose recrystallization temperature is at least 148°C and the selectivity is obtained through the application of susceptors, of inhibitors, or of absorbers, or through masks.

26. Process for the production of moldings with a polymer powder according to at least one of the preceding claims, by a layer-by-layer process in which regions of the respective pulverulent layer are selectively melted through introduction of electromagnetic energy,
**characterized in that**
the powder comprises at least one nylon-11 whose enthalpy of fusion is at least 125 J/g and whose recrystallization temperature is at least 148°C and the selectivity is achieved through the focusing of a laser beam.

27. Process for the production of moldings by selective laser sintering of polymer powder according to at least one of Claims 1 to 24.

28. Molding, produced by one of the processes from Claims 25 to 27,
**characterized in that**
it comprises at least one nylon-11 whose enthalpy of fusion is at least 125 J/g and whose recrystallization temperature is at least 148°C.

29. Molding according to Claim 28,
**characterized in that**
it comprises at least nylon-11, prepared by polycondensation of ω-aminoundecanoic acid.

30. Molding according to either of Claims 28 and 29,
**characterized in that**
it comprises polyamide powder which has been obtained by precipitative crystallization.

31. Molding according to any of Claims 28 to 30,
**characterized in that**
it comprises a nylon-11 with a solution viscosity of from 1.4 to 2.1.

32. Molding according to any of Claims 28 to 31,
**characterized in that**
it comprises a nylon-11 with a solution viscosity of from 1.5 to 1.9.

33. Molding according to any of Claims 28 to 32,
**characterized in that**
it comprises a nylon-11 with a solution viscosity of from 1.6 to 1.7.

34. Molding according to any of Claims 28 to 33,
**characterized in that**
it comprises auxiliaries and/or filler.

35. Molding according to any of Claims 28 to 34,
**characterized in that**
it comprises powder-flow aids as auxiliary.

36. Molding according to any of Claims 28 to 35,
**characterized in that**
it comprises glass particles as filler.

37. Molding according to any of Claims 28 to 36,
**characterized in that**
it comprises metal soaps as auxiliary.

38. Molding according to any of Claims 28 to 37,
**characterized in that**
it comprises organic and/or inorganic pigments.

39. Molding according to any of Claims 28 to 38,
**characterized in that**
it comprises carbon black.

40. Molding according to any of Claims 28 to 39,
**characterized in that**
it comprises titanium dioxide.

## Revendications

1. Poudre de polymère destinée à être utilisée dans un procédé fonctionnant par couches, dans lequel des zones de la couche de poudre respective sont fondues sélectivement par l'apport d'énergie électromagnétique,
**caractérisée en ce que**
la poudre comporte au moins un polyamide 11 ayant une enthalpie de fusion d'au moins 125 J/g et une température de recristallisation d'au moins 148 °C, mesurée par Differential Scanning Calorimetry selon DIN 53765.

2. Poudre de polymère selon la revendication 1,
**caractérisée en ce que**
la poudre comporte au moins un polyamide 11 ayant une enthalpie de fusion d'au moins 130 J/g et une température de recristallisation d'au moins 150 °C.

3. Poudre de polymère selon l'une quelconque des revendications précédentes,
**caractérisée en ce que**
la poudre comporte au moins un polyamide 11 ayant une enthalpie de fusion d'au moins 125 J/g et une température de recristallisation d'au moins 148 °C ainsi qu'une surface BET inférieure à 6 m²/g, mesurée selon DIN/ISO 927766333, et un diamètre moyen de grain compris entre 40 et 120 µm, déterminé par diffraction laser à l'aide du Mastersizer S de Malvern.

4. Poudre de polymère selon l'une quelconque des revendications précédentes,
**caractérisée en ce que**
la poudre comporte au moins un polyamide 11 ayant une enthalpie de fusion d'au moins 125 J/g et une température de recristallisation d'au moins 148 °C ainsi qu'une surface BET inférieure à 5 m²/g et un diamètre moyen de grain compris entre 45 et 100 µm.

5. Poudre de polymère selon l'une quelconque des revendications précédentes,
**caractérisée en ce que**
la poudre comporte au moins un polyamide 11 ayant une enthalpie de fusion d'au moins 125 J/g et une température de recristallisation d'au moins 148 °C ainsi qu'une surface BET inférieure à 5 m²/g et un diamètre moyen de grain compris entre 50 et 70 µm.

6. Poudre de polymère selon l'une quelconque des revendications 1 à 5,
**caractérisée en ce que**
la poudre comporte au moins un polyamide 11 et la sélectivité est réalisée par l'application de suscepteurs, d'inhibiteurs, d'absorbants ou au moyen de masques.

7. Poudre de polymère selon l'une quelconque des revendications 1 à 5,
**caractérisée en ce que**
la poudre comporte au moins du polyamide 11 et la sélectivité est réalisée par la focalisation d'un rayon laser.

8. Poudre de polymère selon au moins l'une quelconque des revendications 1 à 7,
**caractérisée en ce que**
la poudre comporte au moins du polyamide 11, produit par polycondensation d'acide ω-amino-undécanoïque.

9. Poudre de polymère selon au moins l'une quelconque des revendications 1 à 8,
**caractérisée en ce que**
la poudre de polyamide a été obtenue par cristallisation par précipitation.

10. Poudre de polymère selon au moins l'une quelconque des revendications 1 à 9,
**caractérisée en ce**
**qu'**elle comporte du polyamide 11 non régulé.

11. Poudre de polymère selon au moins l'une quelconque des revendications 1 à 9,
**caractérisée en ce**
**qu'**elle comporte du polyamide 11 régulé.

12. Poudre de polymère selon au moins l'une quelconque des revendications 1 à 9,
**caractérisée en ce**
**qu'**elle comporte du polyamide 11 partiellement régulé.

13. Poudre de polymère selon au moins l'une quelconque des revendications 1 à 12,
**caractérisée en ce**
**qu'**on utilise comme régulateur une mono-, di- ou polyamine.

14. Poudre de polymère selon au moins l'une quelconque des revendications 1 à 12,
**caractérisée en ce**
**qu'**on utilise comme régulateur un acide mono-, di- ou polycarboxylique.

15. Poudre de polymère selon au moins l'une quelconque des revendications 1 à 11,
**caractérisée en ce que**
la poudre de polyamide présente une viscosité en solution comprise entre 1,4 et 2,1, mesurée dans une solution de m-crésol à 0,5 % selon DIN 53727.

16. Poudre de polymère selon au moins l'une quelconque des revendications 1 à 11,
**caractérisée en ce que**
la poudre de polyamide présente une viscosité en solution comprise entre 1,5 et 1,9.

17. Poudre de polymère selon au moins l'une quelconque des revendications 1 à 11,
**caractérisée en ce que**
la poudre de polyamide présente une viscosité en solution comprise entre 1,6 et 1,7.

18. Poudre de polymère selon au moins l'une quelconque des revendications 1 à 17,
**caractérisée en ce**
**qu'**elle comporte des adjuvants et/ou des charges.

19. Poudre de polymère selon la revendication 18,
**caractérisée en ce**
**qu'**elle comporte comme adjuvant un adjuvant facilitant l'écoulement.

20. Poudre de polymère selon la revendication 18,
**caractérisée en ce**
**qu'**elle comporte comme charge des particules de verre.

21. Poudre de polymère selon la revendication 18,
**caractérisée en ce**
**qu'**elle comporte comme adjuvant des savons métalliques.

22. Poudre de polymère selon au moins l'une quelconque des revendications 1 à 21,
**caractérisée en ce**
**qu'**elle comporte des pigments organiques et/ou inorganiques.

23. Poudre de polymère selon la revendication 22,
**caractérisée en ce**
**qu'**elle comporte du noir de carbone.

24. Poudre de polymère selon la revendication 22,
**caractérisée en ce**
**qu'**elle comporte du dioxyde de titane.

25. Procédé pour la production de corps moulés avec une poudre de polymère selon au moins l'une quelconque des revendications précédentes, par un procédé fonctionnant par couches, dans lequel des zones de la couche de poudre respective sont fondues sélectivement par l'apport d'énergie électromagnétique,
**caractérisé en ce que**
la poudre contient au moins un polyamide 11 qui présente une enthalpie de fusion d'au moins 125 J/g et une température de recristallisation d'au moins 148 °C et la sélectivité est réalisée par l'application de suscepteurs, d'inhibiteurs, d'absorbants ou au moyen de masques.

26. Procédé pour la production de corps moulés avec une poudre de polymère selon au moins l'une quelconque des revendications précédentes, par un procédé fonctionnant par couches, dans lequel des zones de la couche de poudre respective sont fondues sélectivement par l'apport d'énergie électromagnétique,
**caractérisé en ce que**
la poudre contient au moins un polyamide 11 qui présente une enthalpie de fusion d'au moins 125 J/g et une température de recristallisation d'au moins 148 °C et la sélectivité est réalisée par la focalisation d'un rayon laser.

27. Procédé pour la production de corps moulés par frittage laser sélectif de poudre de polymère selon au moins l'une quelconque des revendications 1 à 24.

28. Corps moulé, produit par l'un des procédés des revendications 25 à 27,
**caractérisé en ce**
**qu'**il comporte au moins un polyamide 11 qui présente une enthalpie de fusion d'au moins 125 J/g et une température de recristallisation d'au moins 148 °C.

29. Corps moulé selon la revendication 28,
**caractérisé en ce**
**qu'**il comporte au moins du polyamide 11, produit par polycondensation d'acides ω-amino-undécanoïques.

30. Corps moulé selon l'une quelconque des revendications 28 et 29,
**caractérisé en ce**
**qu'**il comporte de la poudre de polyamide, qui a été produite par cristallisation par précipitation.

31. Corps moulé selon l'une quelconque des revendications 28 à 30,
**caractérisé en ce**
**qu'**il comporte un polyamide 11 ayant une viscosité en solution comprise entre 1,4 et 2,1.

32. Corps moulé selon l'une quelconque des revendications 28 à 31,
**caractérisé en ce**
**qu'**il comporte un polyamide 11 ayant une viscosité en solution comprise entre 1,5 et 1,9.

33. Corps moulé selon l'une quelconque des revendications 28 à 32,
**caractérisé en ce**
**qu'**il comporte un polyamide 11 ayant une viscosité en solution comprise entre 1,6 et 1,7.

34. Corps moulé selon l'une quelconque des revendications 28 à 33,
**caractérisé en ce**
**qu'**il comporte des adjuvants et/ou des charges

35. Corps moulé selon l'une quelconque des revendications 28 à 34,
**caractérisé en ce**
**qu'**il comporte comme adjuvant un adjuvant facilitant l'écoulement.

36. Corps moulé selon l'une quelconque des revendications 28 à 35,
**caractérisé en ce**
**qu'**il comporte comme charge des particules de verre.

37. Corps moulé selon l'une quelconque des revendications 28 à 36,
**caractérisé en ce**
**qu'**il comporte comme adjuvant des savons métalliques.

38. Corps moulé selon l'une quelconque des revendications 28 à 37,
**caractérisé en ce**
**qu'**il comporte des pigments organiques et/ou inorganiques.

39. Corps moulé selon l'une quelconque des revendications 28 à 38,
**caractérisé en ce**
**qu'**il comporte du noir de carbone.

40. Corps moulé selon l'une quelconque des revendications 28 à 39,
**caractérisé en ce**
**qu'**il comporte du dioxyde de titane.
